# EUROPEAN PATENT APPLICATION

(11) **EP 3 176 979 A1**
(43) Date of publication of application: **07.06.2017**
(21) Application number: 14881726.5
(22) Date of filing: 23.10.2014
(51) Int. Cl.: H04L 12/24

(54) **INFORMATION PROCESSING METHOD AND DEVICE**

(30) Priority: 31.07.2014 CN 201410374597
(71) Applicant: ZTE Corporation, Shenzhen, Guangdong 518057 (CN)
(72) Inventor: AO, Ting, Shenzhen Guangdong 518057 (CN); WU, Bo, Shenzhen Guangdong 518057 (CN); XIAO, Min, Shenzhen Guangdong 518057 (CN)
(74) Representative: Brunazzi, Stefano
(86) International application number: PCT/CN2014/089261
(87) International publication number: WO 2015/117401

(57) **Abstract**

The disclosure discloses a method and device for information processing. In the method, information, which is notified by a Network Virtualization Edge (NVE), about a terminal connected to the NVE and information, which is notified by the NVE, about a connection between the NVE and the terminal is received; and according to the information about the terminal and the information about the connection, a corresponding operation is executed. According to the technical solution provided in the disclosure, a quick forwarding capability of a virtual overlay network and a capability of managing and controlling an entire network resources can be improved.

## Description

### Technical Field

The disclosure relates to the field of communications, and in particular to a method and device for information processing.

### Background

With a widespread use of data centre server virtualization technology, a number of virtual machines is booming, and it is needed to provide a support for massive tenants in hybrid cloud and public cloud data centres; that is a traditional network has not kept with the above requirements. For meeting multi-tenant requirement, an overlay-based Network Virtualization Overlay (NVO) technology emerges; such a virtual overlay network can not only support a multi-tenant and multi-virtual network, but also address spaces and traffics between each two tenants are isolated and invisible. Each tenant can use the same address space in different Virtual Networks (VN). Each tenant can have multiple VNs, but traffic between each two VNs cannot flow freely except through a router, a secure gateway, and the like. An NVO3 can solve a Virtual Machine (VM) migration and multi-tenant problem by only adding a gateway device without changing an existing network, so that customer's investment is protected effectively.

For realizing the NVO, it is needed to virtualize an edge device, which accesses a network, of a terminal TS, identify a terminal packet, and correspondingly encapsulate the packet and then make the packet access to a traditional network for transmission. At present, general technologies may include: a Virtual Extensible Local Area Network (VXLAN) and Network Virtualization Using Generic Routing Encapsulation (NVGRE), both of which can support that a layer-2 packet accesses to a layer-3 network for transmission and a layer-3 packet accesses to the layer-3 network for transmission. On a virtual overlay network, a Network Virtualization Edge (NVE) can be located either in a hypervisor of a host VM or on an external The Onion Router (ToR). If the NVE is on the external ToR, the ToR can be either directly physically connected with the terminal or connected by bridges.

At present, most existing control protocols can be applied to the virtual overlay network to realize information interaction and determine a forwarding path. But for a data centre network, there is a large number of VMs, and types of devices are complicated, which is a tough challenge for traditional protocols, so such a mode like Software Defined Networking (SDN), which is intensively controlled on the virtual overlay network, becomes increasingly popular. Herein, a central controller is like a middleware between a north application and a south switch. The north application mainly clarifies service policies, network configurations and other information to the central controller, and the central controller translates these policies and configurations into south programming instructions and then sends the instructions to the network switch. The most common of a south protocol is OpenFlow. The controller sends encapsulation information and forwarding information to the NVE through OpenFlow. Before sending this information, the central controller must be able to acquire, through a particular channel, switch topology information of an entire network and information about a terminal connected to the NVE. The information about the terminal connected to the NVE can be notified to the central controller by means of a cloud management platform, such a situation is generally applied to that the NVE is located in the hypervisor. However, for a situation where the NVE is located externally, the cloud management platform may be unable to sense the device, that is, the cloud management platform and a centralized controller system are independent of each other. At this point, the central controller cannot provide information needed when the NVE forwards the packet, and cannot directly send a flow table because there is no topology information of the entire network (including the terminal).

The commonly used solution presented in the related art lies in waiting the terminal to send the packet; the NVE sends a request to a controller through a Packet-In message; after the controller receives the Packet-In message, if a related entry cannot be found, the controller waits in a flooding mode a reply from a destination node at a node in a virtual network topology, so as to acquire forwarding information and send the information to nodes of the NVE and other related nodes.

However, the above solution is disadvantaged in that a delay of packet forwarding is increased, and broadcasting packets of the entire network are increased greatly, so the network performance is adversely affected, and it is difficult to apply the solution to a situation having a high requirement on the network performance; besides, it is not good for the controller to acquire the entire network topology in time, so it is impossible to meet requirements for calculating a path faster and better and obtaining a policy in time.

### Summary

The embodiments of the disclosure provide a method and device for information processing, so as to at least solve a problem in the related art that a controller cannot acquire topology information of an entire network in time.

According to an aspect of the disclosure, a method for information processing is provided.

The method for information processing according to an embodiment of the disclosure includes that: receiving information, which is notified by a Network Virtualization Edge (NVE), about a terminal connected to the NVE and information, which is notified by the NVE, about a connection between the NVE and the terminal; and executing a corresponding operation according to the information about the terminal and the information about the connection.

In an example embodiment, the information about the terminal includes at least one of the followings: terminal identity information, terminal policy information and terminal state information.

In an example embodiment, the terminal identity information includes at least one of the followings: a Media Access Control (MAC) address of the terminal; an Internet Protocol (IP) address of the terminal; and a Virtual Network Identity (VNID) to which the terminal belongs.

In an example embodiment, the terminal policy information includes at least one of the followings: Quality of Service (QoS) and an Access Control List (ACL).

In an example embodiment, the terminal state information includes at least one of the followings: an Associate state of the terminal; a De-associate state of the terminal; an Active state of the terminal; a De-active state of the terminal; and an associate state about whether the terminal is a migrating terminal.

In an example embodiment, executing the corresponding operation according to the information about the terminal and the information about the connection includes: when determining that the terminal state information is the Associate state, obtaining network resources and configuration information corresponding to the terminal according to the terminal policy information; and determining whether the network resources and the configuration information are available.

In an example embodiment, determining whether the network resources and the configuration information are available includes one of the followings: when determining that the network resources and the configuration information are available, executing at least one of the followings: saving the information about the terminal and the information about the connection and returning an association success message to the NVE; when determining that the network resources and the configuration information are not available, executing at least one of the followings: not saving the information about the terminal and the information about the connection and returning an associate failure message to the NVE, moreover the associate failure message is used for making the NVE return a connection failure message to the terminal and send an alarm to a pre-set network entity.

In an example embodiment, executing the corresponding operation according to the information about the terminal and the information about the connection includes: when determining that the terminal state information is the Associate state of the migrating terminal, obtaining network resources and configuration information corresponding to the terminal according to the terminal policy information; and determining at least one of the followings: whether the network resources and the configuration information are available and whether an establishment of a migration tunnel in a Virtual Network (VN) is completed, moreover the migration tunnel is used for migrating data on the terminal.

In an example embodiment, determining at least one of the followings: whether the network resources and the configuration information are available and whether the establishment of the migration tunnel in the VN is completed includes one of the followings: when determining at least one of that the network resources and the configuration information are available and the establishment of the migration tunnel is completed, returning an association success message to the NVE, and saving the information about the terminal and the information about the connection; when determining at least one of that the network resources and the configuration information are not available and the establishment of the migration tunnel is not completed, returning an associate failure message to the NVE, moreover the associate failure message is used for making the NVE return a connection failure message to the terminal and send an alarm to the pre-set network entity, and the NVE has no need to save the information about the terminal.

In an example embodiment, executing the corresponding operation according to the information about the terminal and the information about the connection includes: when determining that the terminal state information is the De-associate state, deleting the information about the terminal and the information about the connection stored locally.

In an example embodiment, before deleting the information about the connection between the terminal and the NVE, the method further includes: when determining that the terminal state information is the De-associate state, executing at least one of the followings: sending a deleting instruction to a part or all of the NVEs under a current control and notifying the network to release the network resources, moreover the deleting instruction is used for deleting flow table entries stored in other NVEs and corresponding to the terminal, and notifying the network to release the network resources.

In an example embodiment, executing the corresponding operation according to the information about the terminal and the information about the connection includes: when determining that the terminal state information is the Active state, executing, according to the information about the connection, at least one of the followings: sending an adding instruction to a part or all of the NVEs under a current control and allocating the network resources, moreover the adding instruction is used for adding flow table entries corresponding to the terminal in the part or all of the NVEs; information carried in the adding instruction includes: a mode adopted by the NVE to encapsulate and forward a packet sent by the terminal.

In an example embodiment, executing the corresponding operation according to the information about the terminal and the information about the connection includes: when determining that the terminal state information is the Active state, receiving a request message from the NVE, moreover the request message is used for obtaining a mode of processing a packet sent by the terminal; and executing, according to the information about the connection, at least one of the followings: sending an adding instruction to a part or all of the NVEs under a current control and allocating network resources, moreover the adding instruction is used for adding flow table entries corresponding to the terminal in a part or all of the NVEs; information carried in the adding instruction includes: a mode adopted by the NVE to encapsulate and forward a packet sent by the terminal.

In an example embodiment, executing the corresponding operation according to the information about the terminal and the information about the connection further includes: when determining that the terminal state information is the Active state, obtaining the network resources and the configuration information corresponding to the terminal according to the terminal policy information; and determining whether the network resources and the configuration information are available.

In an example embodiment, determining whether the network resources and the configuration information are available includes one of the followings: when determining that the network resources and the configuration information are available, returning an association success message to the NVE; when determining that the network resources and the configuration information are not available, returning an associate failure message to the NVE, moreover the associate failure message is used for making the NVE return a connection failure message to the terminal and send an alarm to a pre-set network entity, and the NVE has no need to save the information about the terminal.

In an example embodiment, executing the corresponding operation according to the information about the terminal and the information about the connection includes: when determining that the terminal state information is the De-active state, sending a deleting instruction to a part or all of the NVEs under a current control, moreover the deleting instruction is used for deleting flow table entries stored in the part or all of the NVEs and corresponding to the terminal, and releasing the network resources.

In an example embodiment, executing the corresponding operation according to the information about the terminal and the information about the connection further includes: sending a notification message to the NVE, moreover the notification message is used for notifying the NVE of an execution of the deleting instruction.

In an example embodiment, before receiving the information about the terminal and the information about the connection, the method further includes: sending a request message to the NVE, moreover the request message is used for acquiring the information about the terminal and the information about the connection from the NVE.

According to another aspect of the disclosure, another method of information processing is provided.

The method for information processing according to an embodiment of the disclosure includes that: notifying a controller of information about a terminal connected to a Network Virtualization Edge (NVE) and information about a connection between the NVE and the terminal; and receiving a flow table sent by the controller, moreover the flow table is determined by the controller according to the information about the terminal and the information about the connection.

In an example embodiment, notifying the controller of the information about the terminal and the information about the connection includes one of the followings: actively notifying the controller of the information about the terminal and the information about the connection; after receiving a request message from the controller, notifying, according to the request message, the controller of the information about the terminal and the information about the connection.

In an example embodiment, before notifying the controller of the information about the terminal and the information about the connection, the method further includes: receiving the information about the terminal and the information about the connection reported by the terminal connected to the NVE.

In an example embodiment, the information about the terminal includes at least one of the followings: terminal identity information, terminal policy information and terminal state information.

In an example embodiment, the terminal identity information includes at least one of the followings: a Media Access Control (MAC) address of the terminal; an Internet Protocol (IP) address of the terminal; and a Virtual Network Identity (VNID) to which the terminal belongs.

In an example embodiment, the terminal policy information includes at least one of the followings: Quality of Service (QoS) and an Access Control List (ACL).

In an example embodiment, the terminal state information includes at least one of the followings: an Associate state of the terminal; a De-associate state of the terminal; an Active state of the terminal; a De-active state of the terminal; and an associate state about whether the terminal is a migrating terminal.

In an example embodiment, the method further includes: when receiving an associate or migration association success message sent by the controller, notifying the terminal connected to the NVE of a successful establishment of connection.

In an example embodiment, the method further includes: when receiving an associate failure message sent by the controller, notifying the terminal connected to the NVE of an unsuccessful establishment of connection.

In an example embodiment, the method further includes: when receiving a deleting instruction sent by the controller, deleting flow table entries of the terminal connected to the NVE.

In an example embodiment, the method further includes: when receiving an adding instruction sent by the controller, adding the flow table entries of the terminal connected to the NVE.

According to another aspect of the disclosure, a device for information processing is provided.

The device for information processing according to an embodiment of the disclosure includes: a receiving component, arranged to receive information, which is notified by a Network Virtualization Edge (NVE), about a terminal connected to the NVE and information, which is notified by the NVE, about a connection between the NVE and the terminal; and a processing component, arranged to execute a corresponding operation according to the information about the terminal and the information about the connection.

In an example embodiment, the information about the terminal includes at least one of the followings: terminal identity information, terminal policy information and terminal state information.

In an example embodiment, the terminal identity information includes at least one of the followings: a Media Access Control (MAC) address of the terminal; an Internet Protocol (IP) address of the terminal; and a Virtual Network Identity (VNID) to which the terminal belongs.

In an example embodiment, the terminal policy information includes at least one of the followings: Quality of Service (QoS) and an Access Control List (ACL).

In an example embodiment, the terminal state information includes at least one of the followings: an Associate state of the terminal; a De-associate state of the terminal; an Active state of the terminal; a De-active state of the terminal; and an associate state about whether the terminal is a migrating terminal.

In an example embodiment, the processing component includes: a first obtaining element, arranged to, when determining that the terminal state information is the Associate state, obtain network resources and configuration information corresponding to the terminal according to the terminal policy information; and a first determining element, arranged to determine whether the network resources and the configuration information are available.

In an example embodiment, the first determining element is arranged to determine whether the network resources and the configuration information are available includes one of the followings: when determining that the network resources and the configuration information are available, executing at least one of the followings: saving the information about the terminal and the information about the connection and returning an association success message to the NVE; when determining that the network resources and the configuration information are not available, executing at least one of the followings: not saving the information about the terminal and the information about the connection and returning an associate failure message to the NVE, moreover the associate failure message is used for making the NVE return a connection failure message to the terminal and send an alarm to a pre-set network entity; the NVE has no need to save the information about the terminal.

In an example embodiment, the processing component includes: a second obtaining element, arranged to, when determining that the terminal state information is the Associate state of the migrating terminal, obtain network resources and configuration information corresponding to the terminal according to the terminal policy information; and a second determining element, arranged to determine at least one of the followings: whether the network resources and the configuration information are available and whether an establishment of a migration tunnel in a Virtual Network (VN) is completed, moreover the migration tunnel is used for migrating data on the terminal.

In an example embodiment, the second determining element is arranged to determine at least one of the followings: whether the network resources and the configuration information are available and whether the establishment of the migration tunnel in the VN is completed includes one of the followings: when determining at least one of that the network resources and the configuration information are available and the establishment of the migration tunnel is completed, returning an association success message to the NVE, and saving the information about the terminal and the information about the connection; when determining at least one of that the network resources and the configuration information are not available and the establishment of the migration tunnel is not completed, returning an associate failure message to the NVE, moreover the associate failure message is used for making the NVE return a connection failure message to the terminal and send an alarm to the pre-set network entity, and the NVE has no need to save the information about the terminal.

In an example embodiment, the processing component includes: a deleting element, arranged to, when determining that the terminal state information is the De-associate state, delete the information about the terminal and the information about the connection stored locally.

In an example embodiment, the processing component further includes: a first sending element, arranged to, when determining that the terminal state information is the De-associate state, execute at least one of the followings: send a deleting instruction to a part or all of the NVEs under a current control and notify the network to release the network resources, moreover the deleting instruction is used for deleting flow table entries stored in other NVEs and corresponding to the terminal, and notifying the network to release the network resources.

In an example embodiment, the processing component includes: a second sending element, arranged to, when determining that the terminal state information is the Active state, executing, according to the information about the connection, at least one of the followings: send an adding instruction to a part or all of the NVEs under a current control and allocate the network resources, moreover the adding instruction is used for adding flow table entries corresponding to the terminal in the part or all of the NVEs; information carried in the adding instruction includes: a mode adopted by the NVE to encapsulate and forward a packet sent by the terminal.

In an example embodiment, the processing component includes: a receiving element, arranged to, when determining that the terminal state information is the Active state, receive a request message from the NVE, moreover the request message is used for obtaining a mode of processing a packet sent by the terminal; and a third sending element, arranged to execute, according to the information about the connection, at least one of the followings: send an adding instruction to a part or all of the NVEs under a current control and allocate network resources, moreover the adding instruction is used for adding flow table entries corresponding to the terminal in a part or all of the NVEs; the information carried in the adding instruction includes: a mode adopted by the NVE to encapsulate and forward the packet sent by the terminal.

In an example embodiment, the processing component further includes: a third obtaining element, arranged to, when determining that the terminal state information is the Active state, obtain the network resources and the configuration information corresponding to the terminal according to the terminal policy information; and a third determining element, arranged to determine whether the network resources and the configuration information are available.

In an example embodiment, the third determining element is arranged to determine whether the network resources and the configuration information are available includes one of the followings: when determining that the network resources and the configuration information are available, returning an association success message to the NVE; when determining that the network resources and the configuration information are not available, returning an associate failure message to the NVE, moreover the associate failure message is used for making the NVE return a connection failure message to the terminal and send an alarm to a pre-set network entity, and the NVE has no need to save the information about the terminal.

In an example embodiment, the processing component includes: a fourth sending element, arranged to, when it is determined that the terminal state information is the De-active state, send a deleting instruction to a part or all of the NVEs under a current control, moreover the deleting instruction is used for deleting flow table entries stored in the part or all of the NVEs and corresponding to the terminal, and releasing the network resources.

In an example embodiment, the processing component further includes: a fifth sending element, arranged to send a notification message to the NVE, moreover the notification message is used for notifying the NVE of an execution of deleting instruction.

In an example embodiment, the device further includes: a sending component, arranged to send the request message to the NVE, moreover the request message is used for acquiring the information about the terminal and the information about the connection from the NVE.

According to another aspect of the disclosure, another device for information processing is provided.

The device for information processing according to an embodiment of the disclosure includes: a notifying component, arranged to notify a controller of information about a terminal connected to a Network Virtualization Edge (NVE) and information about a connection between the terminal and the NVE; and a first receiving component, arranged to receive a flow table sent by the controller, moreover the flow table is determined by the controller according to the information about the terminal and the information about the connection.

In an example embodiment, the notifying component includes: a first notifying element, arranged to actively notify the controller of the information about the terminal and the information about the connection; and a second notifying element, arranged to, after receiving a request message from the controller, notify, according to the request message, the controller of the information about the terminal and the information about the connection.

In an example embodiment, the device further includes: a second receiving component, arranged to receive the information about the terminal and the information about the connection reported by the terminal connected to the NVE.

In an example embodiment, the information about the terminal includes at least one of the followings: terminal identity information, terminal policy information and terminal state information.

In an example embodiment, the terminal identity information includes at least one of the followings: a Media Access Control (MAC) address of the terminal; an Internet Protocol (IP) address of the terminal; and a Virtual Network Identity (VNID) to which the terminal belongs.

In an example embodiment, the terminal policy information includes at least one of the followings: Quality of Service (QoS) and an Access Control List (ACL).

In an example embodiment, the terminal state information includes at least one of the followings: an Associate state of the terminal; a De-associate state of the terminal; an Active state of the terminal; a De-active state of the terminal; and an associate state about whether the terminal is a migrating terminal.

In an example embodiment, the device further includes: a processing component, arranged to, when receiving an associate or migration association success message sent by the controller, notify the terminal connected to the NVE of a successful establishment of connection.

In an example embodiment, the device further includes: the processing component, further arranged to, when receiving an associate failure message sent by the controller, notify the terminal connected to the NVE of an unsuccessful establishment of connection.

In an example embodiment, the device further includes: the processing component, further arranged to, when receiving a deleting instruction sent by the controller, delete flow table entries of the terminal connected to the NVE.

In an example embodiment, the device further includes: the processing component, further arranged to, when receiving an adding instruction sent by the controller, add the flow table entries of the terminal connected to the NVE.

According to the embodiments of the disclosure, information, which is notified by a Network Virtualization Edge (NVE), about a terminal connected to the NVE and information, which is notified by the NVE, about a connection between the NVE and the terminal is received; and according to the information about the terminal and the information about the connection, a corresponding operation is executed; in such a manner, the problem in the related art that the controller cannot acquire topology information of the entire network in time is solved, and then a quick forwarding capability of a virtual overlay network and a capability of managing and controlling the entire network resources can be improved.

### Brief Description of the Drawings

The accompanying drawings described here are used for providing a deeper understanding of the disclosure, and constitute a part of the application; schematic embodiments of the disclosure and description thereof are used for illustrating the disclosure and not intended to form an improper limit to the disclosure. In the accompanying drawings:
Fig. 1 shows a flowchart of a method for information processing according to an embodiment of the disclosure;
Fig. 2 shows a flowchart of another method for information processing according to an embodiment of the disclosure;
Fig. 3 shows a network diagram of a controller and a NVE according to an example embodiment of the disclosure;
Fig. 4 shows a schematic diagram of a process of migrating from a VM1 to a VM4 according to an example embodiment of the disclosure;
Fig. 5 shows a structural block diagram of a device for information processing according to an embodiment of the disclosure;
Fig. 6 shows a structural block diagram of a device for information processing according to an example embodiment of the disclosure;
Fig. 7 is a structural block diagram of another device for information processing according to an embodiment of the disclosure; and
Fig. 8 is a structural block diagram of another device for information processing according to an example embodiment of the disclosure.

### Detailed Description

The disclosure is elaborated below with reference to the accompanying drawings and embodiments. It needs to be noted that, the embodiments in the application and the features in the embodiments can be combined with each other on condition of not conflicting.

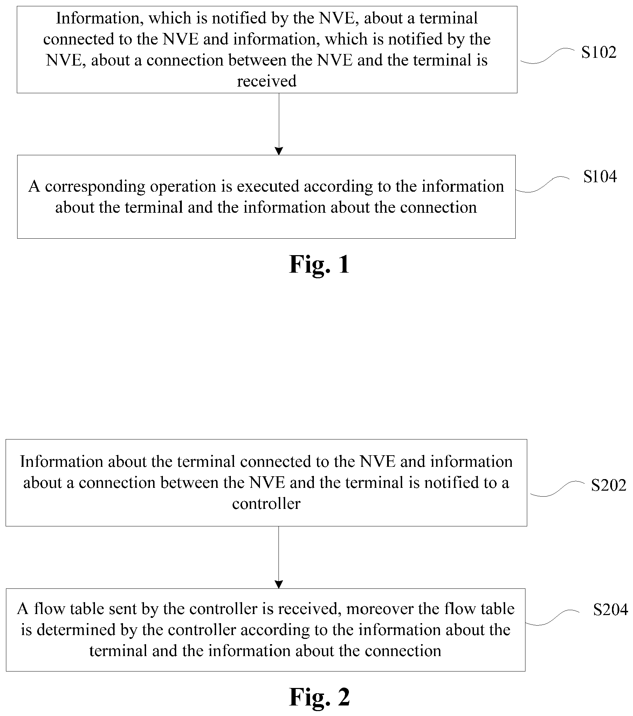

Fig. 1 shows a flowchart of a method for information processing according to an embodiment of the disclosure. As shown in Fig. 1, the method may include the following processing steps:
Step S102: information, which is notified by the NVE, about a terminal connected to the NVE and information, which is notified by the NVE, about a connection between the NVE and the terminal is received;
Step S104: a corresponding operation is executed according to the information about the terminal and the information about the connection.

In the related art, a controller cannot acquire topology information of the entire network in time. According to the method shown in Fig. 1, the information about the terminal connected to the NVE and the information about the connection between the NVE and the terminal is notified to the controller through the NVE, so that the controller can rapidly master the topology information of the entire network. In such a manner, the problem in the related art that the controller cannot acquire the topology information of the entire network in time is solved, and then a quick forwarding capability of a virtual overlay network and a capability of managing and controlling the entire network resources can be improved.

Note that, the embodiments of the disclosure are described taking VMs for example, but it is also applied to an application scenario where a host of a bare computer is connected externally. In addition, the present embodiment is mainly based on an OpenFlow protocol, but an interaction protocol of other NVEs and the controller also falls within the scope of protection of the disclosure.

In an example implementation process, the information about the terminal may include, but is not limited to, at least one of the followings:
(1) terminal identity information;
(2) terminal policy information; and
(3) terminal state information.

In an example implementation process, the terminal identity information may include, but is not limited to, at least one of the followings:
(1) an MAC address of the terminal;
(2) an IP address of the terminal; and
(3) a VNID to which the terminal belongs.

In an example implementation process, the terminal policy information may include, but is not limited to, at least one of the followings:
(1) QoS;
(2) an ACL.

In an example implementation process, the terminal state information may include, but is not limited to, at least one of the followings:
(1) an Associate state of the terminal;
(2) a De-associate state of the terminal;
(3) an Active state of the terminal;
(4) a De-active state of the terminal; and
(5) an associate state about whether the terminal is a migrating terminal.

In an example embodiment, in Step S104, the corresponding operation is executed according to the information about the terminal and the information about the connection may include the following operations:
Step S 1: when it is determined that the terminal state information is the Associate state, network resources and configuration information corresponding to the terminal are obtained according to the terminal policy information; and
Step S2: it is determined whether the network resources and the configuration information are available.

In an example embodiment, in Step S2, it is determined whether the network resources and the configuration information are available may include one of the followings:
(1) when it is determined that the network resources and the configuration information are available, at least one of the followings is executed: the information about the terminal and the information about the connection is saved and, an association success message is returned to the NVE;
(2) when it is determined that the network resources and the configuration information are not available, at least one of the followings is executed: there is no need to save the information about the terminal and the information about the connection and an associate failure message is returned to the NVE, moreover the associate failure message is used for making the NVE return a connection failure message to the terminal and send an alarm to a pre-set network entity, and the NVE has no need to save the information about the terminal.

In an example embodiment, when the terminal state information is the Associate state, the controller saves the information about the terminal and the information about the connection between the terminal and the NVE, and acquires, according to the terminal policy information, the network resources and the configuration information corresponding to the terminal, so as to determine an availability of the corresponding network resources.

In an example embodiment, in Step S104, the corresponding operation is executed according to the information about the terminal and the information about the connection may include the following steps:
Step S3: when it is determined that the terminal state information is the Associate state of the migrating terminal, the network resources and the configuration information corresponding to the terminal are obtained according to the terminal policy information; and
Step S4: it is determined at least one of the followings: whether the network resources and the configuration information are available and whether an establishment of a migration tunnel in a VN is completed, moreover the migration tunnel is used for migrating data on the terminal.

In an example embodiment, in Step S4, that it is determined at least one of the followings: whether the network resources and the configuration information are available and whether the establishment of the migration tunnel in the VN is completed may include one of the followings:
(1) when it is determined at least one of that the network resources and the configuration information are available and the establishment of the migration tunnel is completed, an association success message is returned to the NVE, and the information about the terminal and the information about the connection is saved;
(2) when it is determined at least one of that the network resources and the configuration information are not available and the establishment of the migration tunnel is not completed, the associate failure message is returned to the NVE, moreover an associate failure message is used for making the NVE return a connection failure message to the terminal and send an alarm to the pre-set network entity, and the NVE has no need to save the information about the terminal.

In an example embodiment, an association request of the migrating terminal carriers a Migrating identifier, so as to notify the controller that the terminal is in a migrating state currently. When an in-band migration is needed, the controller needs to first establish a migration tunnel in the network, so as to migrate and transmit data of an original terminal to a destination terminal. After it is determined that the network resources and the configuration information are available and the establishment of the migration tunnel is completed, the controller sends the association success message to the NVE. Other operations (for example, returning the association success message to the terminal) are performed only after the NVE receives the association success message. When the network resources and the configuration information are not available, a failure message is returned to the NVE, and no action is taken. After receiving the failure message, the NVE sends an alarm to a network management or cloud management platform, and returns the connection failure message to the terminal without saving the information about the terminal.

In an example embodiment, in Step S104, that the corresponding operation is executed according to the information about the terminal and the information about the connection may include the following operation:
Step S5: when it is determined that the terminal state information is the De-associate state, the information about the terminal and the information about the connection stored locally is deleted.

In an example embodiment, before the information about the connection between the terminal and the NVE is deleted in Step S5, the method may also include the following step:
Step S6: when it is determined that the terminal state information is the De-associate state, at least one of the followings is executed: a deleting instruction is sent to a part or all of the NVEs under a current control and the network is notified to release the network resources, moreover the deleting instruction is used for deleting flow table entries stored in other NVEs and corresponding to the terminal, and notifying the network to release the network resources.

In an example embodiment, when the terminal state information is the De-associate state, the controller may delete the flow table entries stored in the other NVEs in the same VN and corresponding to the terminal, and release the network resources (when no De-active action is taken before). At the same time, the information about the terminal and the information about the connection between the NVE and the terminal is also deleted from the controller.

In an example embodiment, in Step S104, the corresponding operation is executed according to the information about the terminal and the information about the connection may include the following operation:
Step S7: when it is determined that the terminal state information is the Active state, at least one of the followings is executed according to the information about the connection: an adding instruction is sent to a part or all of the NVEs under a current control and the network resources are allocated according to the information about the connection, moreover the adding instruction is used for adding flow table entries corresponding to the terminal in the part or all of the NVEs; information carried in the adding instruction includes: a mode adopted by the NVE to encapsulate and forward a packet sent by the terminal.

In an example embodiment, it is feasible to send a flow table to other NVEs belonging to the same VN; a content of the flow table may include, but is not limited to, information about how the NVE encapsulates and forwards the packet sent by the terminal and the allocation of the needed network resources, so that the problem of triangle route generating during migration can be solved, and the forwarding efficiency of the network is improved.

In an example embodiment, in Step S104, that the corresponding operation is executed according to the information about the terminal and the information about the connection may include the following operations:
Step S8: when it is determined that the terminal state information is the Active state, a request message from the NVE is received, moreover the request message is used for obtaining a mode of processing a packet sent by the terminal; and
Step S9: at least one of the followings is executed according to the information about the connection: an adding instruction is sent to a part or all of the NVEs under a current control and the network resources are allocated according to the information about the connection, moreover the adding instruction is used for adding the flow table entries corresponding to the terminal in the part or all of the NVEs; the information carried in the adding instruction includes: a mode adopted by the NVE to encapsulate and forward a packet sent by the terminal.

In an example embodiment, the controller saves related information but does not send the related information to other NVEs; when a Packet-in message (reason=0) from the NVE is received to request the controller to notify how to process the packet, the controller sends the flow table to the corresponding NVE aiming at the Packet-in message.

In an example embodiment, in Step S104, that the corresponding operation is executed according to the information about the terminal and the information about the connection may also include the following steps:
Step S10: when it is determined that the terminal state information is the Active state, the network resources and the configuration information corresponding to the terminal are obtained according to the terminal policy information; and
Step S11: it is determined whether the network resources and the configuration information are available.

In an example embodiment, in Step S11, that it is determined whether the network resources and the configuration information are available may include one of the followings:
(1) when it is determined that the network resources and the configuration information are available, an associate success message is returned to the NVE; and
(2) when it is determined that the network resources and the configuration information are not available, an associate failure message is returned to the NVE, moreover the associate failure message is used for making the NVE return a connection failure message to the terminal and send an alarm to a pre-set network entity, and the NVE has no need to save the information about the terminal.

In an example embodiment, when the terminal state information is the Active state, the controller saves the information about the terminal and the information about the connection between the terminal and the NVE, and acquires the network resources and the configuration information corresponding to the terminal according to the terminal policy information, so as to determine the availability of the corresponding network resources (when no Associate action is taken before).

In an example embodiment, in Step S104, that the corresponding operation is executed according to the information about the terminal and the information about the connection may include the following step:
Step S12: when it is determined that the terminal state information is the De-active state, the deleting instruction is sent to a part or all of the NVEs under a current control, moreover the deleting instruction is used for deleting flow table entries stored in the part or all of the NVEs and corresponding to the terminal, and releasing the network resources.

In an example embodiment, in Step S104, that the corresponding operation is executed according to the information about the terminal and the information about the connection may also include the following step:
Step S13: a notification message is sent to the NVE, moreover the notification message is used for notifying the NVE of an execution of the deleting instruction.

In an example embodiment, when the terminal state information is the De-active state, the controller sends instructions to the other NVEs belonging to the same VN, deletes the flow table entries stored in the other NVEs in the same VN and corresponding to the terminal, and releases the network resources. After completing the above operations, the controller may send a message to the NVE, so as to notify the NVE that whether the above operations have been successfully or unsuccessfully executed.

In an example embodiment, in Step S102, before the information about the terminal and the information about the connection is received, the method may also include the following step:
Step S14: the request message is sent to the NVE, moreover the request message is used for acquiring the information about the terminal and the information about the connection from the NVE.

In an example embodiment, the NVE can notify, through the OpenFlow protocol, the controller of the information about the terminal connected to the NVE and the information about the connection between the terminal and the NVE. There are two notifying modes as follows:
mode 1: the NVE actively notifies the controller of the information about the terminal connected to it and the information about the connection between the terminal and it;
mode 2: the controller requests according to needs, and then the NVE notifies, according to the request message, the controller of the information about the terminal connected to the NVE and the information about the connection between the terminal and the NVE. That is, the controller may also send the request message for acquiring the terminal state information to the NVE, and then the NVE provides the controller with the information about the terminal connected to the NVE according to needs.

Fig. 2 shows a flowchart of another method for information processing according to an embodiment of the disclosure. As shown in Fig. 2, the method may include the following processing steps:
Step S202: information about the terminal connected to the NVE and information about a connection between the NVE and the terminal is notified to a controller; and
Step S204: a flow table sent by the controller is received, moreover the flow table is determined by the controller according to the information about the terminal and the information about the connection.

In an example embodiment, after the flow table sent by the controller is received in Step S204, the method may also include the following step:
Step S15: a mode of encapsulating and forwarding a packet sent by the terminal and a mode of allocating the network resources corresponding to the terminal are determined according to the flow table.

In an example embodiment, in Step S202, the information about the terminal and the information about the connection is notified to the controller may include, but is not limited to, one of the followings:
(1) the information about the terminal and the information about the connection is actively notified to the controller;
(2) after a request message is received from the controller, the information about the terminal and the information about the connection is notified to the controller according to the request message.

In an example embodiment, before the information about the terminal and the information about the connection is notified to the controller, the method may also include the following step:
Step S16: the information about the terminal and the information about the connection reported by the terminal connected to the NVE is received.

In an example implementation process, the information about the terminal may include, but is not limited to, at least one of the followings:
(1) the terminal identity information;
(2) the terminal policy information; and
(3) the terminal state information.

In an example implementation process, the terminal identity information may include, but is not limited to, at least one of the followings:
(1) the MAC address of the terminal;
(2) the IP address of the terminal; and
(3) the VNID to which the terminal belongs.

In an example implementation process, the terminal policy information may include, but is not limited to, at least one of the followings:
(1) QoS;
(2) the ACL.

In an example implementation process, the terminal state information may include, but is not limited to, at least one of the followings:
(1) the Associate state of the terminal;
(2) the De-associate state of the terminal;
(3) the Active state of the terminal;
(4) the De-active state of the terminal; and
(5) the associate state about whether the terminal is a migrating terminal.

In an example embodiment, the above method may also include the following processing steps.

Step S 17: when an associate or migration associate success message sent by the controller is received, the terminal connected to the NVE is notified of a successful establishment of connection.

In an example embodiment, the above method may also include the following processing step:
Step S18: when the associate failure message sent by the controller is received, the terminal connected to the NVE is notified of an unsuccessful establishment of connection.

In an example embodiment, the above method may also include the following processing step:
Step S19: when a deleting instruction sent by the controller is received, the flow table entries of the terminal connected to the NVE are deleted.

In an example embodiment, the above method may also include the following processing step:
Step S20: when an adding instruction sent by the controller is received, the flow table entries of the terminal connected to the NVE are added.

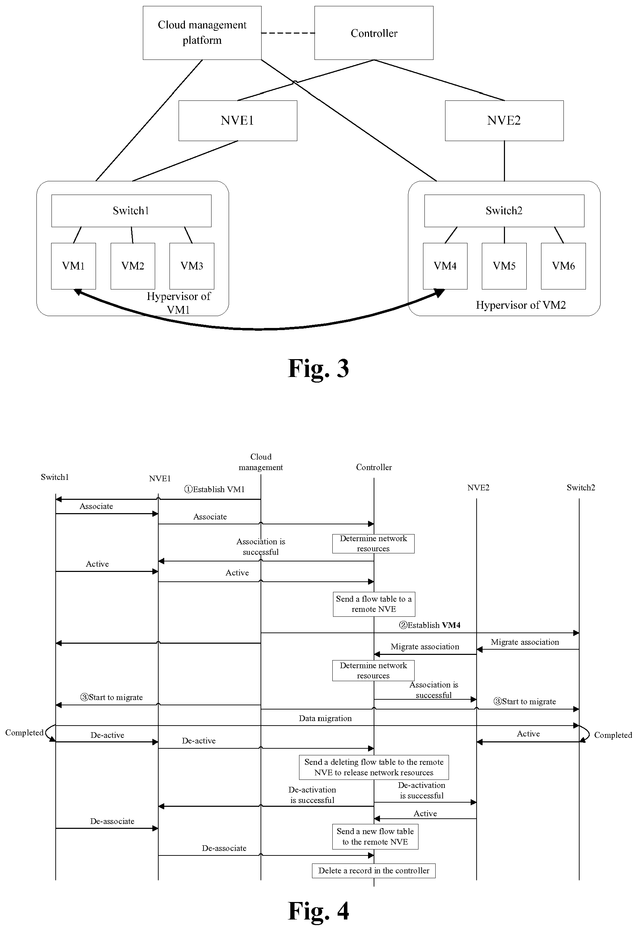

Fig. 3 shows a network diagram of a controller and a NVE according to an example embodiment of the disclosure. As shown in Fig. 3, a cloud management platform creates some virtual site terminals VM1, VM2... VM6. The VM1 and the VM4 communicate in the same VN. After being created, when the VM1 needs to participate in network communications, the VM1 can be notified to the NVE through a pre-set protocol (for example, a Virtual Desktop Protocol); the notification herein carries a current state information of the VM1, that is, whether the VM1 is in the Associate state or the De-associate state, the Active state or the De-active state. After acquiring the state information about the terminal connected to the NVE, the NVE needs to notify, through the OpenFlow protocol, the terminal state information to the controller, and then the controller sends, according to the terminal state information, corresponding instructions to a switch connected to the terminal.

### Example embodiment 1 (extending a Packet-in message of OpenFlow)

Supposing that a NVE2 receives an association request from the VM4, the NVE2 sends an extended Packet-in message to the controller to simulate a data packet sent by the VM4.

```
     /*Packet received on port (datapath -> controller).*/
     struct ofp_packet_in{
     struct ofp_header header;
     unit32_t buffer_id; /*ID assigned by datapath.*/
     unit16_ t total_len; /*Full length of frame.*/
     unit8_t reason; /*reason of sending the Packet-in packet*/
     unit8_t table_id; /*ID of the tablet hat was looked up*/
     unit64_t cookie; /*Cookie of the flow entry that was looked up.*/
     struct ofp_match match; /*carrying the related information of the Packet-in packet, for
 example, the MAC address, the IP address, the VNID, and so on*/
     //unit8_tpad[2]; /*Align to 64bit+16bit*/
     //unit8_tdata[0]; /*Ethernet frame*/
     };
     OFP_ASSERT(sizeof (structofp_packet_in)==32;
     extended reason field;
     /*Why is this packet being sent to the controller?*/
     Enumofp_packet_in_reason{
     OFPR_TABLE_MISS=0, /*No matching flow(table-miss flow entry).*/
     OFPR_APPLY_ACTION=1, /*Output to controller in apply-actions.*/
     OFPR_INVALID_TTL=2, /*Packet has invalid TTL*/
     OFPR_ACTION_SET=3, /*Output to controller in action set.*/
     OFPR_GROUP=4, /*Output to controller in group bucket.*/
     OFPR_PACKET_OUT=5, /*Output to controller in packet-out.*/
     OFPR_TS_ASSOCIATE=6. /*denoting that the terminal needs to perform
 association*/
     OFPR_TS_DEASSOCIATE=7. /*denoting that the terminal needs to perform
 de-association*/
     OFPR_TS_ACTIVE=8. /*denoting that the terminal needs to perform activation*/
     OFPR_TS_DEACTIVE=9. /*denoting that the terminal needs to perform de-activation*/
     OFPR_TS_MIGRATING=10. /*denoting that the terminal needs to perform migrating
 association*/
     };
```

after receiving the packet-in messages of reason=6, 10, the controller binds and saves the information about the terminal of the VM in combination with the address information (for example, the IP address and the MAC address) of the NVE sending the packet-in message, so as to determine that the network resources are available. When reason=10, which means that the VM migrating has been associated to the NVE, it is needed to establish the migration tunnel according to a pre-set policy.

After determining the availability, the controller returns the message about success to the NVE. When the network resources or the configuration information are not available, the controller returns the message about failure to the NVE, and no action is taken. After receiving the message about failure, the NVE sends an alarm to the network management or cloud management platform, and returns the connection failure message to the terminal without saving the information about the terminal.

After receiving the packet-in messages of reason=8, the controller binds and saves the information about the terminal of the VM in combination with the address information (for example, the IP address and the MAC address) of the NVE sending the packet-in message, at the same time, performs the following operations according to the pre-set policy.

Operation 1: the flow table is sent through the OpenFlow protocol, and the other NVEs in the same VN are notified. For example, the VM1 and the VM4 belong to the same VN, the controller sends the flow table to the NVE1 connected to the VM1; when the VM1 needs to send the packet to the VM4 via the NVE1, the NVE1 encapsulates the packet according to the corresponding flow table, moreover a destination IP address of encapsulation is an IP address of the NVE2, and forwards the packet to the NVE2 according to the IP address, so as to send the packet to the VM4 after the NVE2 de-encapsulates the packet.

Operation 2: the controller only stores the related information but not sends the information to the other NVEs; only when the Packet-in message (reason=0) is received from the NVE to request the controller to notify how to process the packet, the controller sends the corresponding flow table to the NVE sending the request aiming at the packet. For example, when the VM1 needs to send the packet to the VM4, because the corresponding flow table entries cannot be found in the NVE1, a Packet-in message is sent to the controller to make a request for obtaining the flow table, and then the controller sends the flow table according to the normal processing flow and specifies the processing action of the packet.

When the controller receives the Packet-in message of reason=9, the controller may selectively send a flow table instruction Modify-State to the other NVEs in the same VN, so as to delete the corresponding flow table entries on these NVEs and release the network resources.

When the controller receives the Packet-in message of reason=7, the controller sends the flow table instruction Modify-State, so as to delete the corresponding flow table entries on the other NVEs in the same VN and release the network resources. Besides, the information about the terminal and the information about the connection between the terminal and the NVE is also deleted from the controller.

When reason=6, 7, 8, 9, a match field carries information about the VM, for example, the MAC address, the IP address, the VNID, VSI, and so on.

### Example embodiment 2 (extending an asynchronous message of OpenFlow)

A new message Notification-attachment is added based on the original asynchronous message of OpenFlow (Packet-in, Flow-removed, Port-status).

The message Notification-attachment notifies the controller that when a packet needs to reach the terminal specified in this message, the packet needs to be forwarded by a NVE, that is, the packet needs to be forwarded via a tunnel whose destination is the NVE.

```
     struct ofp_notification_association{
     struct ofp_header header;
     unit8_t status. /*Status of the VM; associate/de-associate, active/de-active.*/
     unit24_t VSI_type. /*VIS type that the VM connect*/
     unit8_t VSI_type_version.
     unit8_t VSI_format.
     unit64_t VSIID[0].
     unit64_t VSIID[1].
     unit8_t Filter-type.
     struct ofp_match filter_info.
     }
```

filter-info herein carriers related information of the VM connected to the NVE, for example, an MAC address, an IP address and the VNID.

Moreover, a value of the status field can be:

```
     enum ofp_TS_status{
     OFPTSS_ASSOCIATE=0, /*TS associate*/
     OFPCRR_DEASSOCIATE=1, /*TS de-associate*/
     OFPCRR_ACTIVE=2, /*TS active*/
     OFPCRR_DEACTIVE=3, /*TS de-active*/
     OFPCRR_MIGRATING=4. /*migrating TS associate*/
     };
```

When the controller receives the Notification_association message, the controller processes filter_info information and VSI information according to TS status information.

After receiving a Notification_status message of TS_status=OFPTSS_ASSOCIATE or OFPCRR_MIGRATING, the controller binds and saves the information about the terminal of the VM in combination with the address information (for example, the IP address and the MAC address) of the NVE sending the message, so as to determine the availability of the network resources, and then sends a reply success message to notify the NVE. When a message is replied to notify that the network resources are available, the NVE sends a message about the active state to the controller. When the network resources or configuration are not available, a message about failure is replied to the NVE, and no action is taken. After receiving the message about failure, the NVE sends an alarm to the network management or cloud management platform, and returns the connection failure message to the terminal without saving the information about the terminal.

When TS_status=OFPTSS_ACTIVE, the address information (for example, the IP address and the MAC address) of the NVE in the message is bound and saved. At the same time, the following operations are performed according to the pre-set policy.

Operation 1: the flow table is sent through the OpenFlow protocol, and the other NVEs in the same VN are notified. For example, the VM1 and the VM4 belong to the same VN, the controller sends the flow table to the NVE1 connected to the VM1; when the VM1 needs to send the packet to the VM4 via the NVE1, the NVE1 encapsulates the packet according to the corresponding flow table, moreover a destination IP address of encapsulation is an IP address of the NVE2, and forwards the packet to the NVE2 according to the IP address, so as to send the packet to the VM4 after the NVE2 de-encapsulates the packet.

Operation 2: the controller only stores the related information but not sends the information to the other NVEs; when the Packet-in message (reason=0) is received from the NVE to request the controller to notify how to process the packet, the controller sends the flow table to the NVE sending the request. For example, when the VM1 needs to send the packet to the VM4, because the corresponding flow table entries cannot be found in the NVE1, a Packet-in message is sent to the controller to make a request for obtaining the flow table, and then the controller sends the flow table according to the normal processing flow and specifies the processing action of the packet.

It needs to be noted that, before the TS_status=OFPTSS_ACTIVE message is sent, the TS_status=OFPTSS_ASSOCIATE message may not be sent. However, before completing the action corresponding to OFPTSS_ACTIVE, the controller should complete the action corresponding to OFPTSS_ASSOCIATE. When it is successful, the NVE connects to the terminal, or else, the NVE does not connect to the terminal.

When TS_status=OFPTSS_DEACTIVE, the controller may selectively send the flow table instruction Modify-State, so as to delete the corresponding flow table entries on the other NVEs in the same VN and release the network resources.

When TS_status=OFPTSS_DEASSOCIATE, the controller sends the flow table instruction Modify-State, so as to delete the corresponding flow table entries on the other NVEs in the same VN and release the network resources, and deletes the binding relationship between the information about the terminal and the NVE connected to the controller.

Herein, before the TS_status=OFPTSS_DEASSOCIATE message is sent, the TS_status=OFPTSS_DEACTIVE message may not be sent. However, before completing the action corresponding to OFPTSS_DEASSOCIATE, the controller should complete the action corresponding to OFPTSS_DEACTIVE.

When the NVE cannot sense the connection of the terminal (for example, the link between the NVE and the terminal is abnormal), the NVE needs to actively send the TS_status=OFPTSS_DEASSOCIATE message to the controller, so as to notify the controller that the terminal needs to de-associate from the network. In an example embodiment, when the NVE cannot sense the connection of the terminal after waiting for a period of time, the NVE sends a De-associate message to the controller.

### Example embodiment 3

Both the example embodiment 1 and the example embodiment 2 are that the NVE actively notifies the controller of the information (for example, the MAC address, the IP address, and the VNID) about the terminal connected to the NVE; the NVE actively sends a message to notify the controller when there is a terminal connected to the NVE.

In the present example embodiment, the controller initiates a query request and extends a Multipart Message. A message type is defined for the terminal state as follows:

```
     enum ofp_multipart_type {
     /*TS association status request.*/
     OFPMP_TS_STATUS=17,
     }
```

The controller sends a request message:

```
     struct ofp_multipart_request {
     struct ofp_header header;
     unit16_t type; /*type of request message*/
     unit16_t flags; /*OFPMPF_REQ-*flags.*/
     unit8_t pad[4];
     unit8_t body[0]; /*body of request message, which is null here*/
     };
     OFP_ASSERT(sizeof(struct ofp_multipart_request)==16);
```

moreover, it is defined that type=17, which means that the controller needs to know the information about the terminal connected to the switch.

The above body field can either be null or carry a VNID. When the body field is null, it means that the controller needs to acquire all the information about the terminal on the NVE. When the body field carries one or more VNIDs, it means that the controller needs to acquire the information about the terminal belonging to the VN and marked by these VNIDs.

After receiving the request message, the switch replies a message to notify the controller of the related information about the terminal connected to the NVE.

```
     struct ofp multipart reply {
     struct ofp_header header;
     unit16_t type; /*type of message replied*/
     unit16_t flags; /*OFPMPF_REPLY_*flags.*/
     unit8_t pad[4];
     unit8_t bod[0]; /*body of message replied, carrying the information about the
 terminal*/
     };
     OFP_ASSERT(sizeof(struct ofp_multipart_reply)==16);
```

the type herein is still 17, which means that what the switch replies is the information about the terminal connected to the NVE. The body field carries the content of the information about the terminal.

```
     /*Body of the TS association status*/
     struct ofp_TS_association{
     unit8_t status. /*state of terminal: associate/de-associate, active/de-active.*/
     unit24_t VSI_type. /*related policy of terminal*/
     unit8_t VSI_type_version.
     unit8_t VSI_format.
     unit64_t VSIID[0].
     unit64_t VSIID[1].
     unit8_t Filter_type.
     struct ofp match filter_info.
     };
```

the filter_info herein carries the related information about the terminal connected to the NE, for example, the MAC address, the IP address and the VNID.

Moreover, a value of the status field can be:

```
     enum ofp_TS_status{
     OFPTSS_ASSOCIATE=0,
     OFPCRR_DEASSOCIATE=1,
     OFPCRR_ACTIVE=2,
     OFPCRR_DEACTIVE=3,
     };
```

after the controller receives the message replied by the switch, the processing of the message is basically the same as the example embodiment 1 and the example embodiment 2, and will not be elaborated herein.

### Example embodiment 4

When the terminal migrates, it is also feasible to notify the controller by means of a message, so that the controller can send the corresponding flow table.

In the example embodiment, as shown in Fig. 3, the VM1 needs to live migrate to the VM4. Fig. 4 shows a schematic diagram of a process of migrating from VM1 to VM4 according to an example embodiment of the disclosure. As shown in Fig. 4, when the VM1 needs to migrate to the VM4, first it is needed to create the VM4. After the VM4 is created, the VM4 notifies the NVE2 (through a VDP protocol for example), so the NVE2 will send a notification message carrying status=Migrating to the controller, moreover the notification message also carries an IP address, an MAC address and a VNID of the VM4. After receiving the notification message, the controller saves the state information of the VM4, and records the binding relationship between the VM4 and the NVE2; at the same time, the availability of the network resources is determined, when the network resources are available, the controller notifies the NVE2 that the association is successful and the next operation can be executed.

After the VM1 migrates to the VM4, the VM1 also notifies the NVE1 (through the VDP protocol for example); after being informed that the mission of the VM1 is coming to an end, the NVE1 sends a notification message carrying status=Deactive to the controller, moreover the notification message also carries an IP address, an MAC address and a VNID of the VM1. After receiving a control message, the controller sends an instruction of deleting the corresponding flow table to other NVE switches in the same VN, so as to delete all the flow tables related to the VM1. At the same time, the controller can notify these NVEs while deleting the flow table; because the migration of a host has been completed and the controller has released the resources, the flow table is deleted.

At the same time, after the migration of the VM4 is completed, the VM4 is also activated and notified to the NVE2; the NVE2 sends a notification message of status=Active to the controller through the OpenFlow protocol, moreover the notification message also carries the IP address, the MAC address and the VNID of the VM1. After receiving the message of Active, the controller performs the following operations according to the pre-set policy.
Operation 1: the flow table is sent through the OpenFlow protocol, and the other NVEs in the same VN are notified.
Operation 2: the controller stores the related information, and determines that the VM4 has been in an available state, but not sends the information to the other NVEs; when the Packet-in message (reason=0) is received from the NVE to request the controller to notify how to process the packet, the controller sends the flow table to the NVE sending the request. For example, when the VM1 needs to send the packet to the VM4, because the corresponding flow table entries cannot be found in the NVE1, a Packet-in message is sent to the controller to make a request for obtaining the flow table, and then the controller sends the flow table according to the normal processing flow and specifies the processing action of the packet.

Accordingly, the network side completes the support to the migration of the VM.

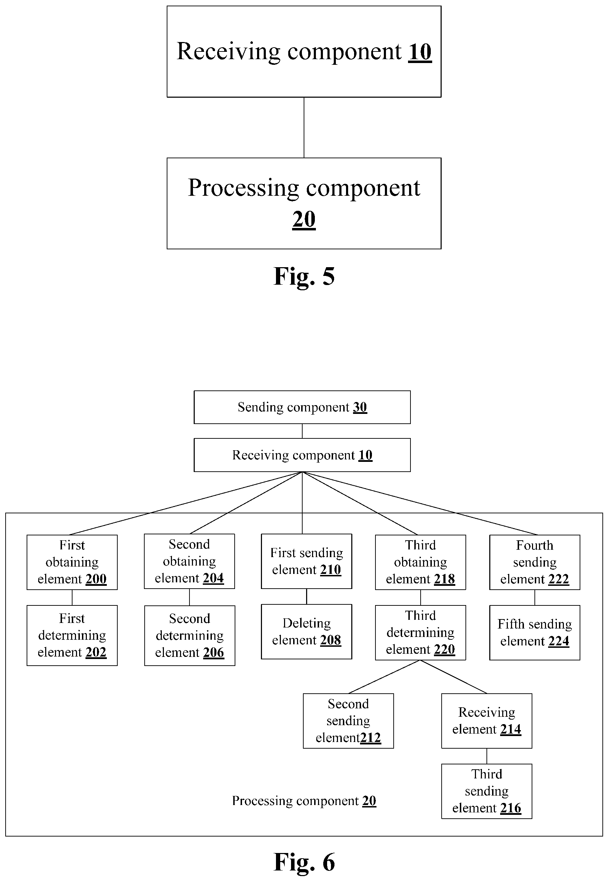

Fig. 5 shows a structural block diagram of a device for information processing according to an embodiment of the disclosure. As shown in Fig. 5, the device for information processing may include: a receiving component 10, which is arranged to receive the information, which is notified by a NVE, about the terminal connected to the NVE, and information, which is notified by the NVE, about a connection between the NVE and the terminal; and a processing component 20, which is arranged to execute the corresponding operation according to the information about the terminal and the information about the connection.

By adopting the device shown in Fig. 5, the problem in the related art that the controller cannot acquire topology information of the entire network in time is solved, and then a quick forwarding capability of a virtual overlay network and a capability of managing and controlling the entire network resources can be improved.

In an example implementation process, the information about the terminal may include, but is not limited to, at least one of the followings:
(1) the terminal identity information;
(2) the terminal policy information; and
(3) the terminal state information.

In an example implementation process, the terminal identity information may include, but is not limited to, at least one of the followings:
(1) the MAC address of the terminal;
(2) the IP address of the terminal; and
(3) the VNID to which the terminal belongs.

In an example implementation process, the terminal policy information may include, but is not limited to, at least one of the followings:
(1) QoS; and
(2) the ACL.

In an example implementation process, the terminal state information may include, but is not limited to, at least one of the followings:
(1) the Associate state of the terminal;
(2) the De-associate state of the terminal;
(3) the Active state of the terminal;
(4) the De-active state of the terminal; and
(5) the associate state about whether the terminal is a migrating terminal.

In an example embodiment, as shown in Fig. 6, the processing component 20 may include: a first obtaining element 200, which is arranged to, when it is determined that the terminal state information is the Associate state, obtain the network resources and the configuration information corresponding to the terminal according to the terminal policy information; and a first determining element 202, which is arranged to determine whether the network resources and the configuration information are available.

In an example embodiment, that the first determining element 202 is arranged to determine whether the network resources and the configuration information are available includes one of the followings: when it is determined that the network resources and the configuration information are available, at least one of the followings is executed: the information about the terminal and the information about the connection is saved and the association success message is returned to the NVE; when it is determined that the network resources and the configuration information are not available, at least one of the followings is executed: there is no need to save the information about the terminal and the information about the connection or an associate failure message is returned to the NVE, moreover the associate failure message is used for making the NVE return a connection failure message to the terminal and send an alarm to a pre-set network entity, and the NVE has no need to save the information about the terminal.

In an example embodiment, as shown in Fig. 6, the processing component 20 may include: a second obtaining element 204, which is arranged to, when it is determined that the terminal state information is the Associate state of the migrating terminal, obtain the network resources and the configuration information corresponding to the terminal according to the terminal policy information; and a second determining element 206, which is arranged to determine at least one of the followings: whether the network resources and the configuration information are available and whether an establishment of the migration tunnel in the VN is completed, moreover the migration tunnel is used for migrating data on the terminal.

In an example embodiment, that the second determining element 206 is arranged to determine at least one of the followings: whether the network resources and the configuration information are available and whether the establishment of the migration tunnel in the VN is completed includes one of the followings: when it is determined at least one of that the network resources and the configuration information are available and the establishment of the migration tunnel is completed, an association success message is returned to the NVE, and the information about the terminal and the information about the connection is saved; when it is determined at least one of that the network resources and the configuration information are not available and the establishment of the migration tunnel is not completed, an associate failure message is returned to the NVE, moreover the associate failure message is used for making the NVE return a connection failure message to the terminal and send an alarm to the pre-set network entity, and the NVE has no need to save the information about the terminal.

In an example embodiment, as shown in Fig. 6, the processing component 20 may include: a deleting element 208, which is arranged to, when it is determined that the terminal state information is the De-associate state, delete the information about the terminal and the information about the connection stored locally.

In an example embodiment, as shown in Fig. 6, the processing component 20 may include: a first sending element 210, which is arranged to, when it is determined that the terminal state information is the De-associate state, execute at least one of the followings: send the deleting instruction to a part or all of the NVEs under a current control and notify the network to release the network resources, moreover the deleting instruction is used for deleting the flow table entries stored in other NVEs and corresponding to the terminal, and notifying the network to release the network resources.

In an example embodiment, as shown in Fig. 6, the processing component 20 may include: a second sending element 212, which is arranged to, when it is determined that the terminal state information is the Active state, executing, according to the information about the connection, at least one of the followings: send an adding instruction to a part or all of the NVEs under a current control and allocate the network resources, moreover the adding instruction is used for adding flow table entries corresponding to the terminal in the part or all of the NVEs; information carried in the adding instruction includes: a mode adopted by the NVE to encapsulate and forward a packet sent by the terminal.

In an example embodiment, as shown in Fig. 6, the processing component 20 may include: a receiving element 214, which is arranged to, when it is determined that the terminal state information is the Active state, receive the request message from the NVE, moreover the request message is used for obtaining a mode of processing a packet sent by the terminal; and a third sending element 216, which is arranged to execute, according to the information about the connection, at least one of the followings: send an adding instruction to a part or all of the NVEs under a current control and allocate network resources, moreover the adding instruction is used for adding flow table entries corresponding to the terminal in a part or all of the NVEs; information carried in the adding instruction includes: a mode adopted by the NVE to encapsulate and forward the packet sent by the terminal.

In an example embodiment, as shown in Fig. 6, the processing component 20 may include: a third obtaining element 218, which is arranged to, when it is determined that the terminal state information is the Active state, obtain the network resources and the configuration information corresponding to the terminal according to the terminal policy information; and a third determining element 220, which is arranged to determine whether the network resources and the configuration information are available.

In an example embodiment, that the third determining element 220 is arranged to determine whether the network resources and the configuration information are available includes one of the followings: when it is determined that the network resources and the configuration information are available, an association success message is returned to the NVE; when it is determined that the network resources and the configuration information are not available, an associate failure message is returned to the NVE, moreover the associate failure message is used for making the NVE return a connection failure message to the terminal and send an alarm to a pre-set network entity, and the NVE has no need to save the information about the terminal.

In an example embodiment, as shown in Fig. 6, the processing component 20 may include: a fourth sending element 222, which is arranged to, when it is determined that the terminal state information is the De-active state, send a deleting instruction to a part or all of the NVEs under a current control, moreover the deleting instruction is used for deleting flow table entries stored in the part or all of the NVEs and corresponding to the terminal, and releasing the network resources.

In an example embodiment, as shown in Fig. 6, the processing component 20 may also include: a fifth sending element 224, which is arranged to send the notification message to the NVE, moreover the notification message is used for notifying the NVE of an execution of the deleting instruction.

In an example embodiment, as shown in Fig. 6, the above device may also include: a sending component 30, which is arranged to send the request message to the NVE, moreover the request message is used for acquiring the information about the terminal and the information about the connection from the NVE.

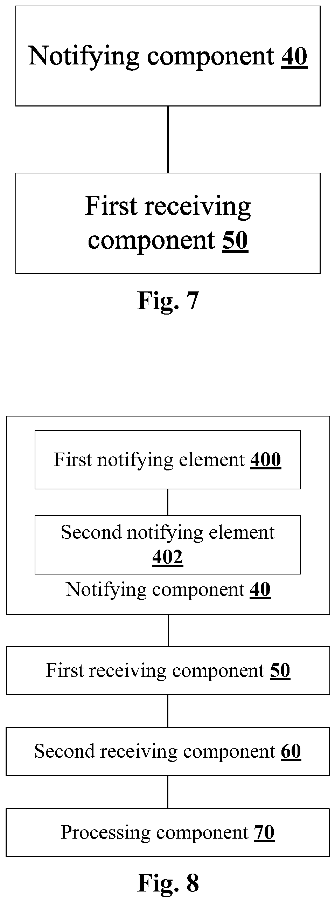

Fig. 7 is a structural block diagram of another device for information processing according to an embodiment of the disclosure. As shown in Fig. 7, the device for information processing may include: a notifying component 40, which is arranged to notify the controller of the information about the terminal connected to a NVE and the information about the connection between the terminal and the NVE; and a first receiving component 50, which is arranged to receive the flow table sent by the controller, moreover the flow table is determined by the controller according to the information about the terminal and the information about the connection.

In an example embodiment, as shown in Fig. 8, the notifying component 40 may include: a first notifying element 400, which is arranged to actively notify the controller of the information about the terminal and the information about the connection; and a second notifying element 402, which is arranged to, after a request message is received from the controller, notify, according to the request message, the controller of the information about the terminal and the information about the connection.

In an example embodiment, as shown in Fig. 8, the above device may also include: a second receiving component 60, which is arranged to receive the information about the terminal and the information about the connection reported by the terminal connected to the NVE.

In an example implementation process, the information about the terminal may include, but is not limited to, at least one of the followings:
(1) the terminal identity information;
(2) the terminal policy information; and
(3) the terminal state information.

In an example implementation process, the terminal identity information may include, but is not limited to, at least one of the followings:
(1) the MAC address of the terminal;
(2) the IP address of the terminal; and
(3) the VNID to which the terminal belongs.

In an example implementation process, the terminal policy information may include, but is not limited to, at least one of the followings:
(1) QoS; and
(2) the ACL.

In an example implementation process, the terminal state information may include, but is not limited to, at least one of the followings:
(1) the Associate state of the terminal;
(2) the De-associate state of the terminal;
(3) the Active state of the terminal;
(4) the De-active state of the terminal; and
(5) the associate state about whether the terminal is a migrating terminal.

In an example embodiment, as shown in Fig. 8, the above device may also include: a processing component 70, which is arranged to, when the associate or migration association success message sent by the controller is received, notify the terminal connected to the NVE of a successful establishment of connection.

In an example embodiment, as shown in Fig. 8, the above device may also include: the processing component 70, which is further arranged to, when an associate failure message sent by the controller is received, notify the terminal connected to the NVE of an unsuccessful establishment of connection.

In an example embodiment, as shown in Fig. 8, the above device may also include: the processing component 70, which is further arranged to, when the deleting instruction sent by the controller is received, delete flow table entries of the terminal connected to the NVE.

In an example embodiment, as shown in Fig. 8, the above device may also include: the processing component 70, when an adding instruction sent by the controller is received, add flow table entries of the terminal connected to the NVE.

It can be seen from the above description that the above embodiments achieve the following technical effects (note that, these effects can be achieved by some example embodiments): by adopting technical solutions provided by the embodiments of the disclosure, for a migration of the VM in a data centre network, a processing of a controller can be coordinated in an migration process, so that the migration can be performed more orderly; besides, the problem of triangle route generating during the migration of the VM is also eliminated. Because the controller can sense a state of the terminal connected to the NVE in time, and send the flow table and modify the flow table in time, a performance of forwarding a packet is improved effectively.

Obviously, those skilled in the art should appreciate that the above components and steps of the disclosure can be implemented by a general-purpose computing device, and they can be centralized in a single computing device or distributed on a network composed of multiple computing devices; optionally, they can be implemented by a program code which is capable of being executed by the computing device, so that they can be stored in a storage device and executed by the computing device; and in some situations, the presented or described steps can be executed in an order different from that described here; or they are made into integrated circuit components, respectively; or multiple components and steps of them are made into a single integrated circuit component to realize. In this way, the disclosure is not limited to any particular combination of hardware and software.

The above is only the example embodiments of the disclosure and not intended to limit the disclosure; for those skilled in the art, the disclosure may have various modifications and changes. Any modifications, equivalent replacements, improvements and the like within the spirit and principle of the disclosure shall fall within the scope of protection of the disclosure.

### Industrial Applicability

As abovementioned, a method and device for information processing provided by the embodiments of the disclosure have the following beneficial effect: a quick forwarding capability of a virtual overlay network and a capability of managing and controlling entire network resources can be improved.

## Claims

1. A method for information processing, comprising:
receiving information, which is notified by a Network Virtualization Edge (NVE), about a terminal connected to the NVE and information, which is notified by the NVE, about a connection between the NVE and the terminal; and
executing a corresponding operation according to the information about the terminal and the information about the connection.

2. The method as claimed in claim 1, wherein the information about the terminal comprises at least one of the followings:
terminal identity information, terminal policy information and terminal state information.

3. The method as claimed in claim 2, wherein the terminal identity information comprises at least one of the followings:
a Media Access Control (MAC) address of the terminal;
an Internet Protocol (IP) address of the terminal; and
a Virtual Network Identity (VNID) to which the terminal belongs.

4. The method as claimed in claim 2, wherein the terminal policy information comprises at least one of the followings:
Quality of Service (QoS) and an Access Control List (ACL).

5. The method as claimed in claim 2, wherein the terminal state information comprises at least one of the followings:
an Associate state of the terminal;
a De-associate state of the terminal;
an Active state of the terminal;
a De-active state of the terminal; and
an associate state about whether the terminal is a migrating terminal.

6. The method as claimed in any one of claims 2 to 5, wherein executing the corresponding operation according to the information about the terminal and the information about the connection comprises:
when determining that the terminal state information is the Associate state, obtaining network resources and configuration information corresponding to the terminal according to the terminal policy information; and
determining whether the network resources and the configuration information are available.

7. The method as claimed in claim 6, wherein determining whether the network resources and the configuration information are available comprises one of the followings:
when determining that the network resources and the configuration information are available, executing at least one of the followings: saving the information about the terminal and the information about the connection and returning an association success message to the NVE;
when determining that the network resources and the configuration information are not available, executing at least one of the followings: not saving the information about the terminal and the information about the connection and returning an associate failure message to the NVE, wherein the associate failure message is used for making the NVE return a connection failure message to the terminal and send an alarm to a pre-set network entity.

8. The method as claimed in any one of claims 2 to 5, wherein executing the corresponding operation according to the information about the terminal and the information about the connection comprises:
when determining that the terminal state information is the Associate state of the migrating terminal, obtaining network resources and configuration information corresponding to the terminal according to the terminal policy information; and
determining at least one of the followings: whether the network resources and the configuration information are available and whether an establishment of a migration tunnel in a Virtual Network (VN) is completed, wherein the migration tunnel is used for migrating data on the terminal.

9. The method as claimed in claim 8, wherein determining at least one of the followings: whether the network resources and the configuration information are available and whether the establishment of the migration tunnel in the VN is completed comprises one of the followings:
when determining at least one of that the network resources and the configuration information are available and the establishment of the migration tunnel is completed, returning an association success message to the NVE, and saving the information about the terminal and the information about the connection;
when determining at least one of that the network resources and the configuration information are not available and the establishment of the migration tunnel is not completed, returning an associate failure message to the NVE, wherein the associate failure message is used for making the NVE return a connection failure message to the terminal and send an alarm to the pre-set network entity, and the NVE has no need to save the information about the terminal.

10. The method as claimed in any one of claims 2 to 5, wherein executing the corresponding operation according to the information about the terminal and the information about the connection comprises:
when determining that the terminal state information is the De-associate state, deleting the information about the terminal and the information about the connection stored locally.

11. The method as claimed in claim 10, before deleting the information about the connection between the terminal and the NVE, further comprising:
when determining that the terminal state information is the De-associate state, executing at least one of the followings: sending a deleting instruction to a part or all of the NVEs under a current control and notifying the network to release the network resources, wherein the deleting instruction is used for deleting flow table entries stored in other NVEs and corresponding to the terminal, and notifying the network to release the network resources.

12. The method as claimed in any one of claims 2 to 5, wherein executing the corresponding operation according to the information about the terminal and the information about the connection comprises:
when determining that the terminal state information is the Active state, executing, according to the information about the connection, at least one of the followings: sending an adding instruction to a part or all of the NVEs under a current control and allocating the network resources, wherein the adding instruction is used for adding flow table entries corresponding to the terminal in the part or all of the NVEs; information carried in the adding instruction comprises: a mode adopted by the NVE to encapsulate and forward a packet sent by the terminal.

13. The method as claimed in any one of claims 2 to 5, wherein executing the corresponding operation according to the information about the terminal and the information about the connection comprises:
when determining that the terminal state information is the Active state, receiving a request message from the NVE, wherein the request message is used for obtaining a mode of processing a packet sent by the terminal; and
executing, according to the information about the connection, at least one of the followings: sending an adding instruction to a part or all of the NVEs under a current control and allocating network resources, wherein the adding instruction is used for adding flow table entries corresponding to the terminal in a part or all of the NVEs; information carried in the adding instruction comprises: a mode adopted by the NVE to encapsulate and forward a packet sent by the terminal.

14. The method as claimed in claim 12 or 13, wherein executing the corresponding operation according to the information about the terminal and the information about the connection further comprises:
when determining that the terminal state information is the Active state, obtaining the network resources and the configuration information corresponding to the terminal according to the terminal policy information; and
determining whether the network resources and the configuration information are available.

15. The method as claimed in claim 14, wherein determining whether the network resources and the configuration information are available comprises one of the followings:
when determining that the network resources and the configuration information are available, returning an association success message to the NVE;
when determining that the network resources and the configuration information are not available, returning an associate failure message to the NVE, wherein the associate failure message is used for making the NVE return a connection failure message to the terminal and send an alarm to a pre-set network entity, and the NVE has no need to save the information about the terminal.

16. The method as claimed in any one of claims 2 to 5, wherein executing the corresponding operation according to the information about the terminal and the information about the connection comprises:
when determining that the terminal state information is the De-active state, sending a deleting instruction to a part or all of the NVEs under a current control, wherein the deleting instruction is used for deleting flow table entries stored in the part or all of the NVEs and corresponding to the terminal, and releasing the network resources.

17. The method as claimed in claim 16, wherein executing the corresponding operation according to the information about the terminal and the information about the connection further comprises:
sending a notification message to the NVE, wherein the notification message is used for notifying the NVE of an execution of the deleting instruction.

18. The method as claimed in claim 1, wherein before receiving the information about the terminal and the information about the connection, further comprising:
sending a request message to the NVE, wherein the request message is used for acquiring the information about the terminal and the information about the connection from the NVE.

19. A method for information processing, comprising:
notifying a controller of information about a terminal connected to a Network Virtualization Edge (NVE) and information about a connection between the NVE and the terminal; and
receiving a flow table sent by the controller, wherein the flow table is determined by the controller according to the information about the terminal and the information about the connection.

20. The method as claimed in claim 19, wherein notifying the controller of the information about the terminal and the information about the connection comprises one of the followings:
actively notifying the controller of the information about the terminal and the information about the connection;
after receiving a request message from the controller, notifying, according to the request message, the controller of the information about the terminal and the information about the connection.

21. The method as claimed in claim 19, wherein before notifying the controller of the information about the terminal and the information about the connection, further comprising:
receiving the information about the terminal and the information about the connection reported by the terminal connected to the NVE.

22. The method as claimed in claim 19, wherein the information about the terminal comprises at least one of the followings:
terminal identity information, terminal policy information and terminal state information.

23. The method as claimed in claim 22, wherein the terminal identity information comprises at least one of the followings:
a Media Access Control (MAC) address of the terminal;
an Internet Protocol (IP) address of the terminal; and
a Virtual Network Identity (VNID) to which the terminal belongs.

24. The method as claimed in claim 22, wherein the terminal policy information comprises at least one of the followings:
Quality of Service (QoS) and an Access Control List (ACL).

25. The method as claimed in claim 22, wherein the terminal state information comprises at least one of the followings:
an Associate state of the terminal;
a De-associate state of the terminal;
an Active state of the terminal;
a De-active state of the terminal; and
an associate state about whether the terminal is a migrating terminal.

26. The method as claimed in claim 19, further comprising: when receiving an associate or migration association success message sent by the controller, notifying the terminal connected to the NVE of a successful establishment of connection.

27. The method as claimed in claim 19, further comprising: when receiving an associate failure message sent by the controller, notifying the terminal connected to the NVE of an unsuccessful establishment of connection.

28. The method as claimed in claim 19, further comprising: when receiving a deleting instruction sent by the controller, deleting flow table entries of the terminal connected to the NVE.

29. The method as claimed in claim 19, further comprising: when receiving an adding instruction sent by the controller, adding flow table entries of the terminal connected to the NVE.

30. A device for information processing, comprising:
a receiving component, arranged to receive information, which is notified by a Network Virtualization Edge (NVE), about a terminal connected to the NVE and information, which is notified by the NVE, about a connection between the NVE and the terminal; and
a processing component, arranged to execute a corresponding operation according to the information about the terminal and the information about the connection.

31. The device as claimed in claim 30, wherein the information about the terminal comprises at least one of the followings:
terminal identity information, terminal policy information and terminal state information.

32. The device as claimed in claim 31, wherein the terminal identity information comprises at least one of the followings:
a Media Access Control (MAC) address of the terminal;
an Internet Protocol (IP) address of the terminal; and
a Virtual Network Identity (VNID) to which the terminal belongs.

33. The device as claimed in claim 31, the terminal policy information comprises at least one of the followings:
Quality of Service (QoS) and an Access Control List (ACL).

34. The device as claimed in claim 31, wherein the terminal state information comprises at least one of the followings:
an Associate state of the terminal;
a De-associate state of the terminal;
an Active state of the terminal;
a De-active state of the terminal; and
an associate state about whether the terminal is a migrating terminal.

35. The device as claimed in any one of claims 31 to 34, wherein the processing component comprises:
a first obtaining element, arranged to, when determining that the terminal state information is the Associate state, obtain network resources and configuration information corresponding to the terminal according to the terminal policy information; and
a first determining element, arranged to determine whether the network resources and the configuration information are available.

36. The device as claimed in claim 35, wherein the first determining element is arranged to determine whether the network resources and the configuration information are available comprises one of the followings:
when determining that the network resources and the configuration information are available, executing at least one of the followings: saving the information about the terminal and the information about the connection and returning an association success message to the NVE;
when determining that the network resources and the configuration information are not available, executing at least one of the followings: not saving the information about the terminal and the information about the connection and returning an associate failure message to the NVE, wherein the associate failure message is used for making the NVE return a connection failure message to the terminal and send an alarm to a pre-set network entity, and the NVE has no need to save the information about the terminal.

37. The device as claimed in any one of claims 31 to 34, wherein the processing component comprises:
a second obtaining element, arranged to, when determining that the terminal state information is the Associate state of the migrating terminal, obtain network resources and configuration information corresponding to the terminal according to the terminal policy information; and
a second determining element, arranged to determine at least one of the followings: whether the network resources and the configuration information are available and whether an establishment of a migration tunnel in a Virtual Network (VN) is completed, wherein the migration tunnel is used for migrating data on the terminal.

38. The device as claimed in claim 37, wherein the second determining element is arranged to determine at least one of the followings: whether the network resources and the configuration information are available and whether the establishment of the migration tunnel in the VN is completed comprises one of the followings:
when determining at least one of that the network resources and the configuration information are available and the establishment of the migration tunnel is completed, returning an association success message to the NVE, and saving the information about the terminal and the information about the connection;
when determining at least one of that the network resources and the configuration information are not available and the establishment of the migration tunnel is not completed, returning an associate failure message to the NVE, wherein the associate failure message is used for making the NVE return a connection failure message to the terminal and send an alarm to the pre-set network entity, and the NVE has no need to save the information about the terminal.

39. The device as claimed in any one of claims 31 to 34, wherein the processing component comprises:
a deleting element, arranged to, when determining that the terminal state information is the De-associate state, delete the information about the terminal and the information about the connection stored locally.

40. The device as claimed in claim 39, wherein the processing component further comprises:
a first sending element, arranged to, when determining that the terminal state information is the De-associate state, execute at least one of the followings: send a deleting instruction to a part or all of the NVEs under a current control and notify the network to release the network resources, wherein the deleting instruction is used for deleting flow table entries stored in other NVEs and corresponding to the terminal, and notifying the network to release the network resources.

41. The device as claimed in any one of claims 31 to 34, wherein the processing component comprises:
a second sending element, arranged to, when determining that the terminal state information is the Active state, executing, according to the information about the connection, at least one of the followings: send an adding instruction to a part or all of the NVEs under a current control and allocate the network resources, wherein the adding instruction is used for adding flow table entries corresponding to the terminal in the part or all of the NVEs; information carried in the adding instruction comprises: a mode adopted by the NVE to encapsulate and forward a packet sent by the terminal.

42. The device as claimed in any one of claims 31 to 34, wherein the processing component comprises:
a receiving element, arranged to, when determining that the terminal state information is the Active state, receive a request message from the NVE, wherein the request message is used for obtaining a mode of processing a packet sent by the terminal; and
a third sending element, arranged to execute, according to the information about the connection, at least one of the followings: send an adding instruction to a part or all of the NVEs under a current control and allocate network resources, wherein the adding instruction is used for adding flow table entries corresponding to the terminal in a part or all of the NVEs; information carried in the adding instruction comprises: a mode adopted by the NVE to encapsulate and forward the packet sent by the terminal.

43. The device as claimed in claim 41 or 42, wherein the processing component further comprises:
a third obtaining element, arranged to, when determining that the terminal state information is the Active state, obtain the network resources and the configuration information corresponding to the terminal according to the terminal policy information; and
a third determining element, arranged to determine whether the network resources and the configuration information are available.

44. The device as claimed in claim 43, wherein the third determining element is arranged to determine whether the network resources and the configuration information are available comprises one of the followings:
when determining that the network resources and the configuration information are available, returning an association success message to the NVE;
when determining that the network resources and the configuration information are not available, returning an associate failure message to the NVE, wherein the associate failure message is used for making the NVE return a connection failure message to the terminal and send an alarm to a pre-set network entity, and the NVE has no need to save the information about the terminal.

45. The device as claimed in any one of claims 31 to 34, wherein the processing component comprises:
a fourth sending element, arranged to, when it is determined that the terminal state information is the De-active state, send a deleting instruction to a part or all of the NVEs under a current control, wherein the deleting instruction is used for deleting flow table entries stored in the part or all of the NVEs and corresponding to the terminal, and releasing the network resources.

46. The device as claimed in claim 45, wherein the processing component further comprises:
a fifth sending element, arranged to send a notification message to the NVE, wherein the notification message is used for notifying the NVE of an execution of the deleting instruction.

47. The device as claimed in claim 30, further comprising:
a sending component, arranged to send the request message to the NVE, wherein the request message is used for acquiring the information about the terminal and the information about the connection from the NVE.

48. A device for information processing, comprising:
a notifying component, arranged to notify a controller of information about a terminal connected to a Network Virtualization Edge (NVE) and information about a connection between the terminal and the NVE; and
a first receiving component, arranged to receive a flow table sent by the controller, wherein the flow table is determined by the controller according to the information about the terminal and the information about the connection.

49. The device as claimed in claim 48, wherein the notifying component comprises:
a first notifying element, arranged to actively notify the controller of the information about the terminal and the information about the connection; and
a second notifying element, arranged to, after receiving a request message from the controller, notify, according to the request message, the controller of the information about the terminal and the information about the connection.

50. The device as claimed in claim 48, further comprising:
a second receiving component, arranged to receive the information about the terminal and the information about the connection reported by the terminal connected to the NVE.

51. The device as claimed in claim 48, wherein the information about the terminal comprises at least one of the followings:
terminal identity information, terminal policy information and terminal state information.

52. The device as claimed in claim 51, wherein the terminal identity information comprises at least one of the followings:
a Media Access Control (MAC) address of the terminal;
an Internet Protocol (IP) address of the terminal; and
a Virtual Network Identity (VNID) to which the terminal belongs.

53. The device as claimed in claim 51, wherein the terminal policy information comprises at least one of the followings:
Quality of Service (QoS) and an Access Control List (ACL).

54. The device as claimed in claim 51, wherein the terminal state information comprises at least one of the followings:
an Associate state of the terminal;
a De-associate state of the terminal;
an Active state of the terminal;
a De-active state of the terminal; and
an associate state about whether the terminal is a migrating terminal.

55. The device as claimed in claim 48, further comprising: a processing component, arranged to, when receiving an associate or migration association success message sent by the controller, notify the terminal connected to the NVE of a successful establishment of connection.

56. The device as claimed in claim 48, further comprising: the processing component, further arranged to, when receiving an associate failure message sent by the controller, notify the terminal connected to the NVE of an unsuccessful establishment of connection.

57. The device as claimed in claim 48, further comprising: the processing component, further arranged to, when receiving a deleting instruction sent by the controller, delete flow table entries of the terminal connected to the NVE.

58. The device as claimed in claim 48, further comprising: the processing component, further arranged to, when receiving an adding instruction sent by the controller, add flow table entries of the terminal connected to the NVE.
